(19) Europäisches Patentamt
European Patent Office
Office européen des brevets

(11) EP 1 240 283 B1

(12) FASCICULE DE BREVET EUROPEEN

(45) Date de publication et mention de la délivrance du brevet:
**17.03.2004 Bulletin 2004/12**

(21) Numéro de dépôt: **00985383.9**

(22) Date de dépôt: **01.12.2000**

(51) Int Cl.[7]: **C10M 173/02**, C10M 155/02, B29C 33/64, C08L 83/04, C10M 107/50

(86) Numéro de dépôt international:
**PCT/FR2000/003361**

(87) Numéro de publication internationale:
**WO 2001/040417 (07.06.2001 Gazette 2001/23)**

(54) **COMPOSITION LUBRIFIANTE A BASE DE SILOXANE, NE DEGAGEANT PAS D'HYDROGENE, SON PROCEDE DE PREPARATION ET SON UTILISATION**

WASSERSTOFFEMISSIONSFREIE SILOXANSCHMIERZUSAMMENSETZUNG, VERFAHREN ZUR HERSTELLUNG UND IHRE ANWENDUNG

LUBRICATING COMPOSITION BASED ON SILOXANE, NOT RELEASING HYDROGEN, PREPARATION METHOD AND USE THEREOF

(84) Etats contractants désignés:
**AT BE CH CY DE DK ES FI FR GB GR IE IT LI LU MC NL PT SE TR**

(30) Priorité: **03.12.1999 FR 9915290**

(43) Date de publication de la demande:
**18.09.2002 Bulletin 2002/38**

(73) Titulaire: **RHODIA CHIMIE**
**92408 Courbevoie Cédex (FR)**

(72) Inventeurs:
- **GIRAUD, Yves**
**F-69110 Sainte Foy lès Lyon (FR)**
- **GUICHARD, Gérald**
**F-69700 Givors (FR)**
- **HAWKINS, Ian**
**F-69670 Vaugneray (FR)**

(74) Mandataire: **Trolliet, Maurice et al**
**RHODIA SERVICES**
**Direction de la Propriété Industrielle**
**CRIT-Carrières - BP 62**
**69192 Saint-Fons Cédex (FR)**

(56) Documents cités:
**EP-A- 0 206 314**
**EP-A- 0 279 372**
**EP-A- 0 635 559**
**FR-A- 2 494 294**
**US-A- 4 554 122**

Remarques:
Le dossier contient des informations techniques présentées postérieurement au dépôt de la demande et ne figurant pas dans le présent fascicule.

EP 1 240 283 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne une composition lubrifiante particulièrement appropriée à la lubrification des vessies de vulcanisation utilisées lors du façonnage et de la vulcanisation de bandages pneumatiques ou semi-pneumatiques.

L'invention concerne également les vessies de vulcanisation revêtues d'une composition lubrifiante selon l'invention ainsi que les bandages pneumatiques ou semi-pneumatiques revêtus de ladite composition lubrifiante.

Selon deux autres de ses aspects, l'invention concerne un procédé de préparation des compositions lubrifiantes de l'invention ainsi que l'utilisation desdites compositions lubrifiantes pour la lubrification des vessies de vulcanisation.

Les pneumatiques en caoutchouc pour véhiculés sont habituellement fabriqués en moulant et en vulcanisant une enveloppe crue, ou non vulcanisée et non façonnée, dans une presse de moulage dans laquelle l'enveloppe crue est pressée vers l'extérieur contre la surface d'un moule au moyen d'une vessie dilatable par un fluide interne. Par ce procédé, l'enveloppe crue est façonnée contre la surface externe du moule qui définit le dessin de la bande de roulement de l'enveloppe et la configuration des flancs. Par chauffage, l'enveloppe est vulcanisée. En général, la vessie est dilatée par la pression interne fournie par un fluide tel qu'un gaz chaud, de l'eau chaude et/ou de la vapeur, qui participe lui aussi au transfert de chaleur pour la vulcanisation. On laisse alors l'enveloppe refroidir un peu dans le moule, ce refroidissement étant parfois favorisé par l'introduction d'eau froide ou plus fraîche dans la vessie. Puis on ouvre le moule, on dégonfle la vessie en relâchant la pression du fluide interne et on retire l'enveloppe du moule à enveloppes. Cette utilisation des vessies de vulcanisation des enveloppes est bien connue dans la technique.

Il est admis qu'il se produit un mouvement relatif notable entre la surface de contact externe de la vessie et la surface interne de l'enveloppe au cours de la phase de dilatation de la vessie avant la vulcanisation complète de l'enveloppe. De même, il se produit également un mouvement relatif considérable entre la surface de contact externe de la vessie et la surface interne vulcanisée de l'enveloppe, après que l'enveloppe a été moulée et vulcanisée, au cours du dégonflement et de l'extraction de la vessie du pneumatique.

Si une lubrification adéquate n'est pas prévue entre la vessie et la surface interne de l'enveloppe, la vessie a généralement tendance à se gondoler, ce qui entraîne une déformation de l'enveloppe dans le moule et aussi une usure et un dépolissage excessifs de la surface de la vessie elle-même. La surface de la vessie tend également à coller sur la surface interne de l'enveloppe après la vulcanisation de l'enveloppe et au cours de la partie du cycle de vulcanisation de l'enveloppe au cours de laquelle la vessie est dégonflée. En outre, des bulles d'air peuvent être emprisonnées entre les surfaces de la vessie et de l'enveloppe, et favoriser l'apparition de défauts de vulcanisation des enveloppes résultant d'un transfert de chaleur inadéquat.

Pour cette raison, la surface externe de la vessie ou la surface interne de l'enveloppe crue ou non vulcanisée est revêtue d'un lubrifiant approprié, parfois désigné sous le nom de "ciment de chemisage".

De nombreuses compositions de lubrifiant ont été proposées à cet effet dans la technique.

On connaît notamment les compositions lubrifiantes décrites dans FR 2 494 294, lesquelles contiennent, à titre de constituants principaux, un polydiméthylsiloxane réactif présentant de préférence des groupes terminaux hydroxyle, un agent réticulant comprenant de préférence des fonctions Si-H et éventuellement un catalyseur de polycondensation.

Des exemples d'agent réticulant à fonction(s) Si-H sont le méthylhydrogénosilane, le diméthylhydrogénosilane et le polyméthylhydrogénosilane. L'inconvénient des compositions lubrifiantes de ce type est leur instabilité au stockage. On constate en effet un crémage de l'émulsion suite au dégagement d'hydrogène pendant le transport et la conservation de la composition lubrifiante. Le dégagement d'hydrogène responsable de l'instabilité des compositions de l'art antérieur résulte essentiellement de la décomposition des constituants à fonction(s) Si-H.

La préparation de compositions lubrifiantes à partir de constituants ne comprenant pas la fonction Si-H, et présentant au demeurant d'excellentes propriétés de durabilité, de lubrification et d'élasticité est donc fortement souhaitable.

Les compositions faisant l'objet de EP 635 559 sont des compositions lubrifiantes à base de siloxane répondant en partie à ces exigences. Ces compositions sont notamment plus stables en ce qu'elles ne dégagent pas d'hydrogène en cours de stockage.

Ces compositions, qui se présentent sous la forme d'émulsions, comprennent à titre de constituants essentiels, un polydiméthylsiloxane non réactif, un polydiméthylsiloxane réactif, de préférence à terminaison hydroxy ou alcoxy et un agent réticulant. Leur durabilité est cependant insuffisante pour une utilisation pratique dans la production de bandages pneumatiques ou semi-pneumatiques.

La présente invention fournit une composition lubrifiante améliorée ne dégageant pas d'hydrogène et présentant par surcroît d'excellentes caractéristiques de glissement et de durabilité, ce qui les rend parfaitement appropriées à la lubrification des vessies utilisées lors de la vulcanisation des bandages pneumatiques et semi-pneumatiques.

La composition lubrifiante de l'invention est une émulsion huile dans eau, à base de siloxane qui ne dégage

pas d'hydrogène. Cette composition comprend plus précisément :

(a) une huile polydiorganosiloxane non réactive aux propriétés lubrifiantes présentant une viscosité dynamique de l'ordre de $5.10^{-2}$ à $30.10^{2}$ Pa.s à 25°C ;
(b) une résine polyorganosiloxane porteuse, avant émulsification, de substituants hydroxyles condensables et comportant avant émulsification au moins deux motifs siloxyles différents choisis parmi ceux de formule $(R_0)_3SiO_{1/2}$ (M) ; $(R_0)_2SiO_{2/2}$(D) ; $R_0SiO_{3/2}$(T) et $SiO_{4/2}$ (Q), l'un au moins de ces motifs étant un motif T ou Q, formules dans lesquelles $R_0$ représente un substituant organique monovalent, le nombre moyen par molécule de radicaux organiques $R_0$ pour un atome de silicium étant compris entre 1 et 2 ; et ladite résine présentant une teneur pondérale en substituants hydroxyles comprise entre 0,1 et 10% en poids, et, de préférence entre 0,2 et 5% en poids ;
(c) un réticulant soluble dans la phase silicone comprenant au moins deux fonctions capables de réagir avec la résine polyorganosiloxane (b) ;
(d) un catalyseur de condensation capable de catalyser la réaction du constituant (b) avec le constituant (c) ;
(e) un tensioactif ; et
(f) de l'eau,

ladite composition comprenant

- de 5 à 95 parties en poids du constituant (a) ;
- de 0,5 à 50 parties en poids du constituant (b) ;
- de 0,1 à 20 parties en poids du constituant (c) ;
- de 0,05 à 10 parties en poids du constituant (d) ;

pour 100 parties en poids de la somme des constituants (a) + (b) + (c) + (d) ;
les quantités de tensioactifs et d'eau étant suffisantes pour l'obtention d'une émulsion huile-dans-eau.

Les constituants (a), (b), (c), (d) et (e) de l'émulsion sont définis en référence à leur structure chimique initiale, c'est-à-dire celle qui les caractérise avant émulsification. Dès lors qu'ils sont en milieu aqueux, leur structure est susceptible d'être grandement modifiée suite aux réactions d'hydrolyse et de condensation.

Par viscosité dynamique, on entend dans le cadre de l'invention la viscosité de type Newtonienne, c'est-à-dire la viscosité dynamique, mesurée de manière connue en soi à une température donnée, à un gradient de vitesse de cisaillement suffisamment faible pour que la viscosité mesurée soit indépendante du gradient de vitesse.

L'huile polydiorganosiloxane non réactive (a) présente une viscosité dynamique généralement comprise entre $5.10^{-2}$ et $30.10^{2}$ Pa.s à 25° C. De préférence, la viscosité dynamique varie entre $5.10^{-2}$ et 30 Pa.s, mieux encore entre 0,1 et 5 Pa.s.

Dans le cadre de l'invention, on entend par "non réactive" une huile qui dans les conditions d'émulsification, de préparation de la composition lubrifiante et d'utilisation, ne réagit chimiquement avec aucun des constituants de la composition.

A titre de constituant (a) préféré, on peut citer les polydiorganosiloxanes linéaires à motif récurrent de formule $V_1V_2SiO_{2/2}$, terminé à ses extrémités de chaîne par des motifs $V_3V_4V_5SiO_{1/2}$, $V_1$, $V_2$, $V_3$, $V_4$ et $V_5$, identiques ou différents, représentant un groupe organique monovalent choisi parmi alkyle, alcényle, aryle, cycloalkyle, cycloalcényle, aralkyle ou alkaryle.

Dans ces huiles, alkyle désigne un groupe hydrocarboné saturé, linéaire ou ramifié, de préférence en $C_1$-$C_6$ (tel que méthyle, éthyle et propyle) ; alcényle désigne un groupe hydrocarboné à insaturation(s) éthylénique(s), linéaire ou ramifié, de préférence en $C_2$-$C_8$ (tel que vinyle, allyle et butadiényle) ; aryle désigne un groupe aromatique, mono-ou polycyclique, hydrocarboné de préférence en $C_6$-$C_{10}$ (tel que phényle ou naphtyle) ; cycloalkyle désigne un groupe carbocyclique saturé, mono- ou polycyclique, de préférence en $C_3$-$C_8$ (tel que cyclohexyle) ; cycloalcényle désigne un groupe cycloalkyle présentant une ou plusieurs insaturations, de préférence en $C_6$-$C_8$ (tel que cyclohexényle) ; aralkyle désigne par exemple benzyle ; alkaryle désigne par exemple tolyle ou xylyle. Plus généralement, alkaryle et aralkyle désignent des groupes dans lesquels les parties aryle et alkyle sont telles que définies ci-dessus.

Avantageusement, les substituants $V_1$, $V_2$, $V_3$, $V_4$ et $V_5$ sont identiques entre eux.

De manière préférée, le constituant (a) est un polydiméthylsiloxane linéaire, non fonctionnalisé, c'est-à-dire à motifs récurrents de formule $(CH_3)_2SiO_{2/2}$ et présentant à ses deux extrémités des motifs $(CH_3)_3SiO_{1/2}$.

Le constituant (a) est généralement introduit dans la composition à raison de 5 à 95 parties en poids pour 100 parties en poids du mélange des constituants (a) + (b) + (c) + (d), de préférence à raison de 50 à 95, mieux encore à raison de 75 à 95.

Le constituant (b) est une résine polyorganosiloxane, porteuse avant émulsification de groupes hydroxyles condensables.

Dans les motifs constitutifs de ces résines, chaque substituant $R_o$ représente un groupe organique monova-

lent.

De façon générale, $R_o$ est un radical hydrocarboné en $C_1$-$C_{20}$ portant éventuellement un ou plusieurs substituants.

Des exemples de radicaux hydrocarbonés sont un groupe aliphatique, saturé ou insaturé, linéaire ou ramifié, présentant préférablement de 1 à 10 atomes de carbone ; un groupe carbocyclique, monocyclique ou polycyclique, saturé, insaturé ou aromatique présentant préférablement de 3 à 18 atomes de carbone, mieux encore de 5 à 10 atomes de carbone ; ou un radical présentant une partie aliphatique telle que définie ci-dessus et une partie carbocyclique telle que définie ci-dessus.

Les substituants du radical hydrocarboné peuvent être des groupes -OR' ou -O-CO-R' dans lesquels R' est un radical hydrocarboné tel que défini ci-dessus, non substitué.

D'autres substituants du radical hydrocarboné peuvent être des groupes aminés, amidés, époxydés ou à fonction uréido.

A titre d'exemple de substituants du radical hydrocarboné, on compte les fonctions aminées du type :

- $-R_a-NR_1R_2$ dans lequel

  $R_a$ ne représente rien ou représente un radical divalent hydrocarboné aliphatique, linéaire ou ramifié, saturé ou insaturé en $C_1$-$C_{20}$, de préférence en $C_1$-$C_{10}$, et par exemple ($C_1$-$C_{10}$)alkylène ;

  et $R_1$ et $R_2$ représentent indépendamment H ; un groupe ($C_1$-$C_{20}$)alkyle, de préférence ($C_1$-$C_{10}$)alkyle ; un groupe ($C_3$-$C_8$)cycloalkyle ; ou un groupe ($C_6$-$C_{10}$)aryle, de préférence phényle ;
- $-R_b-NH-R_c-NR_1R_2$ dans lequel $R_b$ et $R_c$, identiques ou différents, sont tels que définis pour $R_a$ ci-dessus ; et $R_1$ et $R_2$ sont tels que définis ci-dessus ;
- 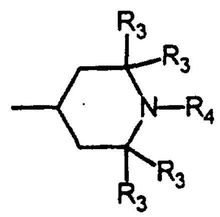

  dans lequel $R_3$ représente alkyle en $C_1$-$C_{20}$, mieux encore ($C_1$-$C_{10}$)alkyle, par exemple ($C_1$-$C_3$)alkyle et notamment méthyle ; aryle en ($C_6$-$C_{20}$), mieux encore ($C_6$-$C_{10}$)aryle, par exemple phényle ; ou arylalkyle dans lequel les parties aryle et alkyle sont telles que définies ci-dessus ;

  $R_4$ représente un atome d'hydrogène ; alkyle en $C_1$-$C_{20}$, mieux encore ($C_1$-$C_{12}$)alkyle, par exemple méthyle ; alkylcarbonyle en $C_2$-$C_{21}$, mieux encore ($C_2$-$C_{13}$)alkylcarbonyle ; aryle en ($C_6$-$C_{20}$), mieux encore ($C_6$-$C_{10}$)aryle par exemple phényle ; ou arylalkyle et préférablement ($C_6$-$C_{10}$)aryl-($C_1$-$C_{12}$)alkyle ; ou bien encore $R_4$ représente O ;

  et
- 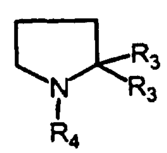

  dans lequel $R_3$ et $R_4$ sont tels que définis ci-dessus.

  Arylalkyle est préférablement benzyle.

Il est cependant préférable que la concentration en groupements -OR', - O-CO-R', aminés, amidés, epoxydés ou uréido, lorsqu'ils sont présents dans la résine soit limitée, de façon à ne pas dépasser le seuil de tolérance au-delà duquel la stabilité de l'émulsion serait compromise.

Les résines silicones (b) sont des polymères organopolysiloxanes ramifiés bien connus dont les procédés de préparation sont décrits dans de nombreux brevets. Comme exemples concrets de résines utilisables, on peut citer les résines MQ, MDQ, DQ, DT et MDT hydroxylées et des mélanges de celles-ci. Dans ces résines, chaque groupement OH est porté par un atome de silicium appartenant à un motif M, D ou T.

De préférence, comme exemples de résines utilisables, on peut citer les résines organopolysiloxanes hydroxylées ne comprenant pas, dans leur structure, de motif Q. De manière plus préférentielle, on peut citer les résines

DT et MDT hydroxylées comprenant au moins 20% en poids de motifs T et ayant une teneur pondérale en groupement hydroxyle allant de 0,1 à 10% et, mieux, de 0,2 à 5%. Dans ce groupe de résines plus préférentielles, celles où le nombre moyen de substituants $R_o$ pour un atome de silicium est compris, par molécule, entre 1,2 et 1,8, conviennent plus particulièrement. De manière encore plus avantageuse, on utilise des résines de ce type, dans la structure desquelles au moins 80% en nombre des substituants $R_o$ sont des radicaux méthyle.

La résine (b) est liquide à température ambiante. De manière préférée, la résine présente une viscosité dynamique à 25° C comprise entre 0,2 et 200 Pa.s.

La résine est incorporée dans la composition lubrifiante à raison de 0,5 à 50 parties en poids pour cent parties en poids de la somme des constituants (a), (b), (c) et (d), de préférence à raison de 3 à 30, mieux de 5 à 15 parties en poids.

Le réticulant (c) soluble dans la phase silicone comprend au moins deux fonctions capables de réagir avec la résine (b) de façon à provoquer une réticulation de ladite résine. De manière avantageuse, lesdites fonctions réactives du réticulant (c) réagissent avec la résine (b) dans les conditions de préparation de l'émulsion.

Le réticulant (c) a de préférence pour formule :

$$Y_aSi(Zi)_{4-a}$$

dans laquelle :

a est 1 ou 2 ;
Y est un groupe monovalent organique ; et
les groupes Zi, identiques ou différents, sont choisis parmi $-OX_a$ ;

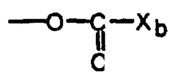

et $-O-N = CX_1X_2$ dans lesquels $X_a$, $X_b$, $X_1$ et $X_2$ sont indépendamment des radicaux hydrocarbonés aliphatiques, linéaires ou ramifiés, saturés ou insaturés, de préférence en $C_1$-$C_{20}$ (par exemple en $C_1$-$C_{10}$); étant entendu que $X_1$ et $X_2$ peuvent en outre représenter hydrogène et que $X_a$ est un radical éventuellement substitué par ($C_1$-$C_{10}$) alcoxy.

Selon un mode de réalisation préféré de l'invention, a représente 1, de telle sorte que le réticulant (c) a pour formule : $YSi(Zi)_3$.

De préférence encore, les groupes Zi sont identiques entre eux.

Un groupe préféré de réticulant (c) est formé par l'ensemble des organotrialcoxysilanes, des organotriacyloxysilanes, des organotrioximosilanes et des tétraalkylsilicates.

Plus généralement, s'agissant du symbole Y, l'expression "groupe monovalent organique" englobe notamment les radicaux aliphatiques, saturés ou insaturés, linéaires ou ramifiés en $C_1$-$C_{30}$ ; les radicaux carbocycliques, mono- ou polycycliques, saturés, insaturés ou aromatiques en $C_6$-$C_{30}$ ; ainsi que les radicaux présentant à la fois une partie aliphatique telle que définie ci-dessus et une partie carbocyclique telle que définie ci-dessus ; chacun de ces radicaux étant éventuellement substitué par une fonction amino, époxy, thiol ou ester.

Des exemples de groupes Y sont plus particulièrement les radicaux ($C_1$-$C_{10}$)alkyle, ($C_1$-$C_{10}$)alcoxy ou ($C_2$-$C_{10}$)alcényle, éventuellement substitués par un groupe :

- époxy ;
- thiol ;
- ($C_3$-$C_8$)cycloalkyle éventuellement substitué par époxy ;
- ($C_1$-$C_{10}$)alkylcarbonyloxy éventuellement substitué par époxy ;
- ($C_2$-$C_{10}$)alcénylcarbonyloxy éventuellement substitué par époxy ;
- ($C_3$-$C_8$)cycloalkylcarbonyloxy éventuellement substitué par époxy ;
- ($C_6$-$C_{10}$)arylcarbonyloxy ;
- $-R_a-NR_1R_2$ où $R_a$, $R_1$ et $R_2$ sont tels que définis ci-dessus ;
- $-R_b-NH-R_c-NR_1R_2$ où $R_a$, $R_b$, $R_1$ et $R_2$ sont tels que définis ci-dessus ;

- 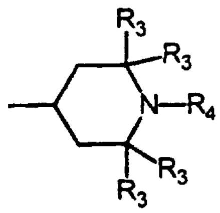

dans lequel $R_3$ et $R_4$ sont tels que définis ci-dessus ;

- 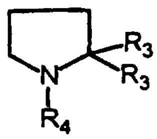

On préfère que $R_3$ représente méthyle, phényle ou benzyle et $R_4$ représente H ou méthyle.

De façon encore préférée, Y est $(C_2\text{-}C_{10})$alcényle non substitué ; ou bien $(C_1\text{-}C_{10})$alkyle éventuellement substitué par un groupe choisi parmi :

- thiol ;
- $(C_1\text{-}C_{10})$alkylcarbonyloxy éventuellement substitué par époxy ;
- $(C_3\text{-}C_8)$cycloalkyle éventuellement substitué par époxy ;
- $(C_2\text{-}C_{10})$alcénylcarbonyloxy ; et
- - $R_a$-$NR_1R_2$ où $R_a$ ne représente rien ou représente $(C_1\text{-}C_6)$alkylène et $R_1$, $R_2$ représentent indépendamment H, $(C_3\text{-}C_8)$cycloalkyle ou $(C_6\text{-}C_{10})$aryle et notamment phényle.

A titre d'exemple, Y représente aminopropyle, éthylaminopropyle, n-butylaminoéthyle, cyclohexylaminopropyle, phénylaminoéthyle, N-aminoéthylaminopropyle, diméthylaminopropyle, glycidyloxypropyle, 3,4-époxycyclohexyléthyle, mercaptopropyle, méthacryloxypropyle, méthyle, éthyle ou vinyle.

Les groupes Zi sont avantageusement choisis parmi $(C_1\text{-}C_{10})$alcoxy ; $(C_1\text{-}C_{10})$alcoxy-$(C_1\text{-}C_{10})$alcoxy ; $(C_1\text{-}C_{10})$alkylcarbonyloxy ; ou un groupe oxime - O-N=$CX_1X_2$ dans lequel $X_1$ et $X_2$ sont indépendamment H ou $(C_1\text{-}C_{10})$ alkyle.

Préférablement, Zi représente méthoxy, éthoxy, propoxy, méthoxyéthoxy, acétoxy ou un groupe oxime.

Un groupe particulièrement préféré de constituants (c) est formé par les alkyltrialcoxysilanes de formule YSi$(Zi)_3$ dans laquelle Y est alkyle, notamment $(C_1\text{-}C_{30})$ alkyle (de préférence $(C_1\text{-}C_{10})$ alkyle) et Zi est alcoxy, notamment $(C_1\text{-}C_{20})$ alcoxy, de préférence $(C_1\text{-}C_{10})$ alcoxy.

Parmi ceux-ci, on peut citer le méthyltriméthoxysilane et le méthyltriéthoxysilane.

D'autres réticulants (c) appropriés sont décrits dans US 4 889 770, tels que :

beta-aminoéthyltriméthoxysilane,
beta-aminoéthyltriéthoxysilane,
beta-aminoéthyltriisopropoxysilane,
gamma-aminopropyltriméthoxysilane,
gamma-aminopropyltriéthoxysilane,
gamma-aminopropyltri(n-propoxy)silane,
gamma-aminopropyl(n-butoxy)silane,
delta-aminobutyltriméthoxysilane,
epsilon-aminohexyltriéthoxysilane,
4-aminocyclohexyltriéthoxysilane,
4-aminophényltriméthoxysilane,
N-aminoéthyl-gamma-aminopropyltriméthoxysilane,
N-aminoéthyl-gamma-aminopropyltriéthoxysilane,
beta-glycidoxyéthyltriméthoxysilane,
beta-glycidoxyéthyltriéthoxysilane,
gamma-glycidoxypropyltriéthoxysilane,

beta-(3,4-époxycyclohexyl)éthyltriméthoxysilane,
beta-(3,3-époxycyclohexyl)éthyltriéthoxysilane,
gamma-(3,4-époxycyclohexyl)propyltriéthoxysilane,
gamma-mercaptopropyltriméthoxysilane,
gamma-mercaptopropyltriéthoxysilane,
gamma-méthacryloxypropyltriméthoxysilane,
gamma-méthacryloxypropyltriéthoxysilane,
méthyltriméthoxysilane,
éthyltriéthoxysilane,
vinyltriméthoxysilane,
allyltriméthoxysilane,

et les composés correspondants dans lesquels les groupes alcoxy ont été remplacés par des groupes alkylcarbonyloxy ou oximes.

La composition lubrifiante comprend de 0,1 à 20 parties en poids, pour cent parties en poids de la somme des constituants (a) + (b) + (c) + (d), du réticulant (c), de préférence de 0,2 à 10 parties en poids, mieux de 0,5 à 5.

Le catalyseur de condensation (d) est choisi parmi ceux conventionnellement utilisés dans la technique pour catalyser la réticulation de résines du type (b) à l'aide d'agents de réticulation du type (c) définis ci-dessus.

Des exemples de catalyseurs utilisables dans le cadre de l'invention sont les sels organométalliques, et les titanates tels que l'orthotitanate de tétrabutyle. A titre de sel organométallique, on peut mentionner le naphténate de zirconium et l'octylate de zirconium.

Ledit catalyseur est de préférence un composé catalytique à l'étain, généralement un sel d'organoétain.

Les sels d'organoétain utilisables sont décrits en particulier dans l'ouvrage de NOLL, Chemistry and Technology of Silicones Academic Press (1968), page 337. On peut également définir comme composé catalytique à l'étain, soit des distannoxanes, soit des polyorganostannoxanes, soit le produit de réaction d'un sel d'étain, en particulier d'un dicarboxylate d'étain sur du polysilicate d'éthyle, comme décrit dans le brevet US 3 862 919.

Le produit de réaction d'un silicate d'alkyle ou d'un alkyltrialcoxysilane sur le diacétate de dibutylétain comme décrit dans le brevet belge BE 842 305, peut convenir aussi.

Selon une autre possibilité, on a recours à un sel d'étain II, tel que $SnCl_2$ ou l'octoate stanneux.

De façon avantageuse, le catalyseur est le sel d'étain d'un acide organique, tels que le diacétate de dibutylétain, le dilaurate de dibutylétain, le dilaurate de dioctylétain, le dioctate de dibutylétain, le naphténate de zinc, le naphténate de cobalt, l'octylate de zinc, l'octylate de cobalt et le di(isomercaptoacétate) de dioctylétain.

Les sels d'étain préférés sont les bischélates d'étain (EP 147 323 et EP 235 049), les dicarboxylates de diorganoétain et, en particulier, les diversatates de dibutyl- ou de dioctylétain (brevet britannique GB 1 289 900, le diacétate de dibutyl- ou de dioctylétain, le dilaurate de dibutyl- ou de dioctylétain ou les produits d'hydrolyse des espèces précipitées (par exemple les diorgano et polystannoxanes).

Le catalyseur (d) est généralement introduit dans la composition lubrifiante à raison de 0,05 à 10 parties en poids, pour cent parties en poids de la somme des constituants (a) + (b) + (c) + (d), de préférence à raison de 0,08 à 5 parties en poids, et mieux encore de 0,1 à 2 parties en poids.

Le dilaurate de dioctylétain est tout particulièrement préféré.

La nature de tensioactif (e) sera facilement déterminée par l'homme du métier, l'objectif étant de préparer une émulsion stable.

Les tensioactifs anioniques, cationiques, non-ioniques et zwitterioniques peuvent être employés seuls ou en mélange.

A titre de tensioactif anionique, on peut mentionner les sels de métaux alcalins des acides hydrocarbonés aromatiques sulfoniques ou les sels de métaux alcalins d'acides alkylsulfuriques.

Les tensioactifs non-ioniques sont plus particulièrement préférés dans le cadre de l'invention. Parmi ceux-ci, on peut citer les éthers alkyliques ou aryliques de poly(oxyde d'alkylène), l'hexastéarate de sorbitan polyoxyéthyléné, l'oléate de sorbitan polyoxyéthyléné ayant un indice de saponification de 102 à 108 et un indice d'hydroxyle de 25 à 35 et les éthers de cétylstéaryle et de poly(oxyde d'éthylène).

A titre d'éther arylique de poly(oxyde d'alkylène), on peut mentionner les alkylphénols polyoxyéthylénés. A titre d'éther alkylique de poly(oxyde d'alkylène), on peut mentionner l'éther isodécylique de polyéthylèneglycol et l'éther triméthylnonylique de polyéthylèneglycol contenant de 3 à 15 unités d'oxyde d'éthylène par molécule.

La quantité de tensioactif (e) est fonction du type de chacun des constituants en présence ainsi que de la nature même du tensioactif utilisé. En règle générale, la composition comprend de 0,5 à 10% en poids de tensioactif (mieux encore de 0,5 à 5% en poids) et de 40 à 95% en poids d'eau (mieux encore de 45 à 90% en poids).

De façon avantageuse, la composition lubrifiante de l'invention peut comprendre en outre un agent réticulant (g) hydrosoluble choisi parmi les silanes et/ou les polydiorganosiloxanes hydroxylés, ledit réticulant étant porteur, par

molécule, d'au moins un groupe organique à fonction Fr, Fr représentant une fonction amino éventuellement substituée, époxy, acroyle ($CH_2$=CH-CO) éventuellement substituée, méthacroyle (-$CH_2$=C($CH_3$)-CO-) éventuellement substituée, uréido ($NH_2$-CO-NH-) éventuellement substituée, thiol éventuellement substituée ou halogène.

Au sens de la présente invention, on doit entendre par hydrosolubilité, l'aptitude d'un produit à se dissoudre dans l'eau à une température de 25° C, à hauteur d'au moins 5% en poids.

Les substituants organiques du réticulant (g) autres que le (ou les) groupe(s) organique(s) à fonction Fr sont des radicaux aliphatiques, saturés ou insaturés, linéaires ou ramifiés, présentant préférablement de 1 à 10 atomes de carbone ; des radicaux carbocycliques, monocycliques ou polycycliques, saturés, insaturés ou aromatiques présentant de préférence de 3 à 18 atomes de carbone, mieux encore de 5 à 10 atomes de carbone ; ou des radicaux présentant à la fois une partie aliphatique et une partie carbocyclique.

Selon un mode de réalisation préféré de l'invention, Fr est une fonction aminée.

Ainsi, un groupement organique à fonction Fr préféré est un groupement de formule $-R_a-NR_1R_2$ ; $-R_b-NH-R_c-NR_1R_2$ ;

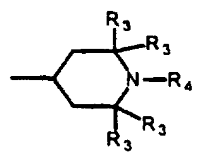

et

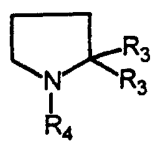

où $R_a$, $R_b$, $R_c$, $R_1$, $R_2$, $R_3$ et $R_4$sont tels que définis ci-dessus.

Selon un mode de réalisation préféré de l'invention, l'agent réticulant hydrosoluble a pour formule :

$$R_2R_1N-R_a-Si(OH)_3$$

dans laquelle $R_a$, $R_1$ et $R_2$ sont tels que définis ci-dessus. Plus préférablement, $R_a$ représente aikylène, notamment ($C_1$-$C_6$)alkylène, et $R_1$ et $R_2$ représentent indépendamment un atome d'hydrogène ou un groupe alkyle, notamment ($C_1$-$C_6$)alkyle.

A titre d'exemple, on peut citer le 3-aminopropyltrihydroxysilane.

L'agent de réticulation hydrosoluble peut être un polydiorganosiloxane hydroxylé linéaire et/ou cyclique, à motifs siloxyles MD et/ou D, et/ou une résine polydiorganosiloxane hydroxylée présentant, dans sa structure, des motifs siloxyles T éventuellement associés à des motifs M et/ou D et/ou Q, ou bien encore des motifs siloxyles Q associés à des motifs M et/ou D.

Ce polydiorganosiloxane linéaire, cyclique ou en réseau n'est pas substitué par des fonctions organiques hydrolysables telles que des fonctions alcoxy.

Dans ces polydiorganosiloxanes, les motifs siloxyles M, D, T et Q sont définis comme suit :

motif M = $G_3SiO_{1/2}$
motif D = $G_2SiO_{2/2}$
motif T = $GSiO_{3/2}$
motif Q = $SiO_{4/2}$,
G étant un substituant organique tel que défini ci-dessus pour le réticulant (g), ou bien représentant hydroxy ou bien encore étant une fonction Fr, étant entendu que dans chaque structure moléculaire, au moins un des symboles G représente un groupe hydroxyle et au moins un autre des symboles G représente une fonction Fr.

De manière préférée, G est alkyle, notamment ($C_1$-$C_6$)alkyle (par exemple méthyle, éthyle, isopropyle, tertiobutyle et n-hexyle), hydroxyle, alcényle (par exemple vinyle ou allyle) ou bien encore une fonction Fr, les fonctions

Fr préférées étant telles que définies ci-dessus.

A titre de polydiorganosiloxane hydroxylé linéaire, utilisable comme agent de réticulation (g), on peut citer le polyméthylsiloxane dont les deux extrémités comportent un hydroxyle et donc chaque atome de silicium de la chaîne est porteur d'une fonction Fr.

Ce constituant (g),quand il est présent dans la composition lubrifiante, est utilisé à raison de 0,5 à 15 parties en poids pour cent parties en poids de la somme des constituants (a) + (b) + (c) + (d) + (g), de préférence à raison de 0,6 à 5 parties en poids, et mieux à raison de 0,8 à 3 parties en poids.

La présence de l'agent réticulant (g) améliore notamment la durabilité de la composition lubrifiante.

En outre, la composition de l'invention peut comprendre encore (h) une huile polydiorganosiloxane linéaire réactive présentant au moins deux groupements OH par molécule présentant une viscosité dynamique à 25° C généralement comprise entre $5.10^{-2}$ et $30.10^{2}$ Pa.s.

Dans le cadre de l'invention, le terme "réactive" désigne la réactivité du constituant (h) vis-à-vis des agents de réticulation (c) et/ou (g) présents dans la composition.

De préférence, le composant (h) réagit avec l'agent de réticulation dans les conditions de préparation de l'émulsion.

Les substituants organiques de l'huile (h) sont généralement tels que définis ci-dessus dans le cas de l'agent réticulant (g) (groupes aliphatiques ou/et carbocycliques) et sont éventuellement substitués par des radicaux -OH et/ou amino (éventuellement substitué) et/ou halogène et/ou cyano. Le substituant du groupement amino peut être un radical aliphatique, un radical carbocyclique, ou comprendre à la fois une partie aliphatique et une partie carbocyclique, les radicaux aliphatiques et carbocycliques étant tels que définis ci-dessus.

A titre d'halogène on peut mentionner le chlore, le fluor, le brome ou l'iode, le fluor étant plus spécifiquement approprié.

De façon avantageuse, les groupements organiques de l'huile (h) sont des groupes alkyle, de préférence en $C_1$-$C_6$ ; cycloalkyle, de préférence en $C_3$-$C_8$, aryle, de préférence en $C_6$-$C_{10}$ (et par exemple phényle) ; ou alcényle en $C_2$-$C_6$ (par exemple allyle ou vinyle) ; lesdits groupes étant éventuellement substitués par hydroxyle et/ou amino (éventuellement substitué), et/ou halogéno, et/ou cyano.

Les substituants du groupe amino sont par exemple alkyle, tel que ($C_1$-$C_{10}$)alkyle ; alcényle, tel que ($C_2$-$C_8$) alcényle ; aryle, tel que ($C_6$-$C_{10}$)aryle ; cycloalkyle, tel que ($C_3$-$C_8$)cycloalkyle.

Un groupe préféré de composants (h) est constitué des huiles de formule :

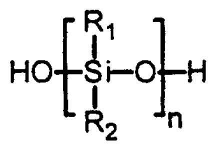

dans laquelle n est un entier supérieur ou égal à 10, $R_1$ et $R_2$ identiques ou différents représentent -OH ; alkyle, notamment ($C_1$-$C_6$)alkyle ; cycloalkyle, notamment ($C_3$-$C_8$)cycloalkyle ; alcényle, notamment ($C_2$-$C_6$)alcényle ; cycloalcényle, notamment ($C_5$-$C_8$)cycloalcényle ; ou amino.

De manière préférée, $R_1$ et $R_2$ sont indépendamment choisis parmi ($C_1$-$C_6$)alkyle (tel que méthyle) ; ($C_6$-$C_{10}$) aryle, et par exemple phényle ; ($C_2$-$C_8$)alcényle (tel que vinyle) ; ou bien encore amino ; ($C_1$-$C_6$)alkylamino ; ou di ($C_1$-$C_6$)-alkylamino ; chacun des groupes alkyle et aryle étant éventuellement substitué par halogéno (et de préférence fluoro) ou cyano.

Les huiles (h) les plus utilisées, du fait de leur disponibilité dans les produits industriels, sont celles pour lesquelles $R_1$ et $R_2$ sont indépendamment choisis parmi méthyle, éthyle, propyle, phényle, vinyle et 3,3,3-trifluoropropyle. De manière préférée, 80% en nombre de ces radicaux sont des radicaux méthyle.

En pratique, on privilégiera, en tant qu'huile (h), les $\alpha,\omega$-dihydroxypolydiméthylsiloxanes portant aux extrémités des motifs $(CH_3)_2(OH)SiO_{1/2}$.

Dans le cadre de la présente invention, on peut spécialement utiliser les les $\alpha,\omega$-dihydroxypolydiorganosiloxanes préparés par le procédé de polymérisation anionique décrit dans les brevets américains précités : US 2 891 920 et surtout US 3 294 725 (cités comme référence).

Le constituant (h), quand il est présent, est utilisé à raison de 0,5 à 30% en poids, et de préférence de 1 à 10% en poids, par rapport au poids total de la composition.

La composition lubrifiante selon la présente invention peut contenir aussi un ou plusieurs ingrédients additionnels tels que des polymères filmogènes, des lubrifiants complémentaires et des agents anti-friction, des agents de coalescence, des agents mouillants ou dispersants, des agents d'évacuation de l'air, des agents anti-mousse, des épaississants, des stabilisants, des conservateurs tels que des biocides, des antifongiques en quantités pouvant varier

considérablement, par exemple, entre 0,2 et 50% en poids de la composition.

A titre de polymère filmogène, on peut citer par exemple les copolymères styrène-acrylique.

Des exemples d'épaississants sont les épaississants cellulosiques (carboxyméthylcellulose), acryliques, polyuréthane, les gommes hydrocolloïdales (gomme xanthane) et leurs mélanges.

En tant qu'agent de coalescence, on pourra utiliser les glycols et/ou les coupes pétrolières aliphatiques (fractions de distillation du pétrole).

Des agents mouillants ou dispersables utilisables dans le cadre de l'invention sont par exemple les phosphates et/ou les polyacryliques, tels que par exemple l'hexamétaphosphate de sodium et les polyacrylates de sodium.

Les compositions de l'invention peuvent être préparées de façon conventionnelle par mise en oeuvre des méthodes classiques de l'état de la technique.

Un premier procédé consiste à mettre en émulsion dans une phase aqueuse comprenant l'ensemble des constituants hydrosolubles, un mélange des constituants lipophiles (a), (b), (c), (d) et éventuellement (h), en présence du tensioactif (e).

Des modifications de ce procédé sont naturellement envisageables. Une préémulsion huile dans eau peut être d'abord préparée à partir de quelques-uns seulement des constituants formant la composition finale. Puis les constituants manquants peuvent être ajoutés, soit directement à l'émulsion (cas des constituants hydrosolubles), soit ultérieurement sous la forme d'émulsion (cas des constituants solubles dans la phase silicone).

Ainsi, le catalyseur (d), le polymère filmogène et l'huile réactive (h) peuvent être ajoutés, soit directement à la phase silicone avant émulsification, soit après formation de la préémulsion, sous la forme d'une émulsion additionnelle.

L'émulsification peut être directe ou procéder par inversion.

Dans le cas où on procède par inversion, il peut être avantageux de préparer une préémulsion ne contenant qu'une faible proportion d'eau, de procéder à son inversion (par exemple par broyage), puis diluer l'émulsion résultante avec l'eau restante, éventuellement additionnée d'un ou plusieurs constituants hydrosolubles.

Une variante préférée consiste notamment à préparer une préémulsion huile dans eau comprenant l'ensemble des constituants (a), (b) et (c) et éventuellement (g), en présence du tensioactif (e) avant d'ajouter à cette préémulsion les constituants manquants sous la forme d'émulsion(s) additionnelle(s).

Ainsi, selon un autre de ses aspects, l'invention concerne un procédé pour la préparation d'une composition lubrifiante selon l'invention, comprenant les étapes consistant à :

$\alpha$ - mettre en émulsion dans l'eau (f), un mélange de l'huile polydiorganosiloxane non réactive (a), de la résine polyorganosiloxane (b), et du réticulant soluble dans la phase silicone (c), en présence du tensioactif (e), de façon à préparer une émulsion de type huile dans eau ;

$\beta$ - ajouter à l'émulsion précédente, une émulsion du catalyseur (d) dans l'eau.

D'ordinaire, le procédé de l'invention est mis en oeuvre à température ambiante.

L'émulsification, à l'étape $\alpha$, peut être directe ou procéder par inversion. On opère de préférence par inversion.

Lorsqu'un agent réticulant hydrosoluble (g) est incorporé à la composition lubrifiante, celui-ci est de préférence incorporé, sous la forme d'une solution aqueuse, à l'issue de l'étape $\alpha$, à, une préémulsion huile dans eau contenant l'ensemble des constituants (a), (b), (c) et (e).

Lorsqu'une huile polydiorganosiloxane linéaire réactive (h) est présente, celle-ci est préférablement ajoutée à l'émulsion huile dans eau à l'issue de l'étape $\beta$ sous la forme d'une préémulsion huile dans eau.

L'émulsion additionnelle du catalyseur (d) ainsi que toute émulsion ajoutée à la préémulsion résultant de l'étape (a) est préparée préférablement en présence du même tensioactif qu'à l'étape $\alpha$. Cependant, on peut envisager l'utilisation de tout autre type de tensioactif, tel que par exemple un poly(alcool vinylique). Ce dernier tensioactif est tout particulièrement utile dans le cas où l'on souhaite préparer une émulsion additionnelle d'un catalyseur à l'étain.

Le procédé de l'invention peut comprendre en outre une étape supplémentaire de chauffage de l'émulsion résultante. Cette étape permet d'accélérer les processus de réticulation. Elle peut être remplacée par une étape de stockage de l'émulsion à température ambiante jusqu'à réticulation complète.

Les propriétés lubrifiantes de la composition de l'invention se trouvent nettement améliorées en cas de réticulation complète des constituants réticulables de la composition.

Les huiles et résines (a), (b) et (h) ainsi que les réticulants (c) et (g) sont disponibles dans le commerce ou facilement accessibles à l'homme du métier par mise en oeuvre de procédés classiques décrits dans la technique antérieure.

Lorsque la résine (b) ou le réticulant (c) sont fonctionnalisés, la fonctionnalisation est facilement réalisée par réaction de substitution ou d'addition appropriée.

Lorsque le constituant facultatif (g) représente une résine silicone hydrosoluble hydroxylée, celle-ci peut être obtenue :

→ par cohydrolyse :

- d'au moins un silane ($S_1$) substitué par des fonctions Fr et par des Substituants Organiques Fonctionnels Hydrolysables **(Sofh)** identiques ou différents entre eux, de préférence des -$OR_d$ avec $R_d$ = radical hydrocarboné, avantageusement alkyle ;
- avec au moins un silane ($S_2$) substitué par des **Sofh** identiques ou différents entre eux et par rapport à ceux de ($S_1$), à l'exclusion de substituants Fr;

→ par hétérocondensation des hydrolysats dérivant des silanes $S_1$ et $S_2$ ;
→ puis par "stripping" ou entraînement à la vapeur des hydrolysats dérivant des **Sofh**.

Au sens de l'invention, les substituants organofonctionnels hydrolysables (**Sofh**), susceptibles de générer in situ des composés organiques volatils (COV) lors de la réticulation par condensation sont, par exemple, des alcoxy, des acétoxy, des cétiminoxy, des énoxy.
Dans la mesure où les **Sofh** les plus courants sont des alcoxyles -$OR_d$, les mécanismes d'hétérocondensation intervenant sont du type OH/OH et OH/$OR_d$, ces OH ou $OR_d$ étant portés par les hydrolysats dérivant des silanes $S_1$ et $S_2$. Les hydrolysats dérivant des **Sofh** sont quant à eux des alcools, dans ce cas de figure.
Ainsi en pratique, le silane $S_1$ est avantageusement un trialcoxysilane, de préférence un triméthoxysilane, un triéthoxysilane, un méthyldiméthoxysilane ou un méthyldiéthoxysilane, porteur d'une fonction Fr aminée du type :

- 3-aminopropyle ;
- N-méthyl-3-aminopropyle :
- N-aminoéthyl-3-aminopropyle ;
- $C_6H_5CH_2NH(CH_2)_2NH-(CH_2)_3-$ ;
- 3-uréidopropyle ;
- 3-(4,5-dihydroimidazole-1-yl)propyle ;
- 3-méthacryloxypropyl : $CH_2=C(CH_3)-COO-(CH_2)_3-$ ;
- 3-glycidyloxypropyl :

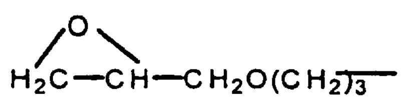

(les autres substituants de Si dans l'agent de réticulation (g) étant en ce cas exempts de **Sofh**)
- 3-mercaptopropyl ;
- 3-chloropropyle.

S'agissant de $S_2$, les **Sofh** qu'il comprend sont de préférence des radicaux alcoxy, avantageusement en $C_1$-$C_6$, par exemple : méthoxy, éthoxy ou propoxy.
Ce silane $S_2$, de préférence un alcoxysilane, peut également comporter au moins un substituant alkyle, avantageusement en $C_1$-$C_6$, par exemple : méthyle, éthyle, propyle.
Ces résines produites par hétérocondensation de $S_1$ et $S_2$ sont décrites, notamment, dans la demande de brevet européen n° 0 675 128, dont le contenu est intégré par référence dans le présent exposé.
Selon un deuxième mode de réalisation, le réticulant facultatif (g) est une résine obtenue :

→ par hydrolyse d'un silane $S_3$ substitué par des Fr et des **Sofh**,
→ par homocondensation des silanes $S_3$ hydrolysés,
→ et par "stripping" entraînement à la vapeur des hydrolysats dérivant des **Sofh.**

Le silane $S_3$ est, de préférence, un alcoxysilane Fr substitué. Il peut s'agir, par exemple, d'un trialcoxysilane permettant d'obtenir une résine hydroxylée à motifs T, dénommée également résine T(OH).
Ce silane $S_3$ peut être du même type que le silane $S_1$ tel que défini supra. Les fonctions Fr substituant $S_3$ répondent à la même définition que celle donnée ci-dessus.
Comme illustration de ce deuxième mode de mise en oeuvre d'un réticulant (g) de type résine polydiorganosiloxane, on peut citer celui obtenu à partir de γ-aminopropyltriéthoxysilane hydrolysé et soumis à un "stripping" de l'éthanol formé par l'hydrolyse. La résine polyhomocondensée obtenue, est un mélange d'oligomères contenant de 4 à 10 silicium et comprenant des motifs :

$T(OH) = R''Si(OH)O_{2/2}$
$T = R''SiO_{3/2}$
$T(OH)_2 = R''Si(OH)_2O_{1/2}$
$T(OH)_3 = R''Si(OH)_3$,

ces motifs étant respectivement présents en quantité décroissante, avec R" = $NH_2$-$(CH_2)$-$_3$. Ils 'agit par exemple d'une résine T(OH) aminée.

Suivant une variante de l'invention, la température peut être augmentée jusqu'à 40° C de façon à accélérer la réticulation des constituants en présence.

La présente invention concerne également les articles lubrifiés à l'aide de la composition lubrifiante de l'invention ainsi que l'utilisation de la composition lubrifiante de l'invention pour la lubrification d'articles divers.

Plus particulièrement, l'invention concerne :

- une vessie dilatable en caoutchouc revêtue sur sa surface externe d'une composition selon l'invention, pour le façonnage et la vulcanisation de bandages pneumatiques ou semi-pneumatiques ;
- une vessie en caoutchouc dilatable pouvant être obtenue par chauffage de la vessie dilatable définie ci-dessus, notamment à 80-150° C (de préférence 100-150° C), de façon à assurer la réticulation totale des constituants réticulables de l'émulsion ;
- un bandage pneumatique ou semi-pneumatique cru comportant des éléments qui constitueront sa bande de roulement externe destinée à venir au contact du sol, revêtu sur sa surface interne d'une composition selon l'invention ;
- l'utilisation d'une composition lubrifiante selon l'invention lors du façonnage et de la vulcanisation de bandages pneumatiques ou semi-pneumatiques, pour la lubrification de la vessie de vulcanisation dilatable en caoutchouc.

La composition lubrifiante de l'invention peut être appliquée de façon quelconque, et par exemple par pulvérisation, par brossage ou encore à l'aide d'une éponge ou d'un pinceau. Il est préférable d'opérer de façon à recouvrir l'article à revêtir d'une couche régulière de revêtement.

La lubrification de la vessie de vulcanisation utilisée lors de la vulcanisation de bandages pneumatiques ou semi-pneumatiques peut être réalisée de deux façons différentes.

Lors de la fabrication des bandages pneumatiques ou semi-pneumatiques, un bandage cru est placé dans un moule à bandages, une vessie dilatable est disposée dans le moule, le moule est fermé et la vessie est dilatée par application d'une pression interne de fluide chaud, de telle sorte que le bandage se trouve plaqué contre le moule, façonné et vulcanisé. Le moule est alors ouvert, la vessie est dégonflée et le bandage est récupéré, façonné et vulcanisé. Une même vessie est utilisée pour la fabrication d'un millier de bandages.

La vessie en caoutchouc dilatable utilisée lors de la fabrication des bandages est initialement revêtue d'une composition selon l'invention.

Au départ, la lubrification de la vessie est directe. Ensuite, il intervient un épuisement de l'effet lubrifiant de cette vessie.

Dans cette phase ultérieure, c'est la surface interne du bandage (celle qui vient au contact de la vessie) qui est revêtue de la composition lubrifiante. Il y a régénération de la lubrification de la vessie en caoutchouc par transfert à partir du bandage.

De façon générale, les cycles de pressage du moule/dégagement de la vessie, mis en oeuvre lors de la fabrication des bandages se succèdent de la façon suivante :

- la vessie initialement revêtue de la composition lubrifiante (lubrification directe) et chauffée à 80-150° C est utilisée sans revêtement ultérieur pendant 5 à 10 cycles (chaque cycle aboutissant à la fabrication d'un bandage différent), puis
- les cycles suivants sont mis en oeuvre par utilisation de cette même vessie (pour laquelle le revêtement de lubrification est épuisé) à partir de bandages pneumatiques ou semi-pneumatiues à chaque fois revêtus de la composition lubrifiante de l'invention : la lubrification de la vessie a lieu en ce cas par transfert.

La composition lubrifiante de l'invention ne comprend aucun constituant à liaison Si-H de telle sorte que le risque de dégagement d'hydrogène en cours de stockage ou de transport est nul.

La composition lubrifiante de l'invention présente en outre d'excellentes propriétés de glissement et de durabilité.

Les exemples suivants qui illustrent l'invention témoignent des excellentes propriétés lubrifiantes des compositions de l'invention.

**EXEMPLE 1**

Cet exemple illustre une composition lubrifiante selon l'invention comprenant un agent réticulant hydrosoluble (constituant (g)).
La formulation de cette composition, qui est une émulsion huile dans eau, est donnée dans le tableau ci-dessous.

TABLEAU 1

| Nature du constituant | Identification | Pourcentage en poids dans l'émulsion |
|---|---|---|
| Polydiméthylsiloxane linéaire à terminaison $(CH_3)_3SiO_{1/2}$ de viscosité dynamique égale à $10^{-1}$ Pa.s à 25° C | Constituant (a) | 39,92 |
| Résine MDT-OH (1) | Constituant (b) | 5,71 |
| Méthyltriéthoxysilane | Constituant (c) | 0,38 |
| Emulsion de dilaurate de dioctylétain (2) | Constituant (d) | 0,24 |
| Alcool isotridécylique polyéthoxylé (3) | Constituant (e) | 2,71 |
| $NH_2-(CH_3)_3-Si(OH)_3$ (4) | Constituant (g) | 2,42 |
| Agent anti-mousse | | 0,20 |
| Agent anti-oxydant | | 0,05 |
| Bactéricide | | 0,02 |
| Epaissisant (gomme xanthane) | | 0,11 |
| Agents mouillants | | 0,30 |
| Eau distillée | | 47,94<br>100 |

(1) Résine MDT présentant un taux d'hydroxylation de 0,5% en poids, un nombre moyen par molécule de radicaux organiques pour un atome de silicium de 1,5, une viscosité dynamique à 25° C de 0,1 Pa.s et les proportions suivantes de motifs siloxyles :
M : 17% en mole
D : 26% en mole
T : 57% en mole.
(2) Emulsion de dilaurate de dioctylétain à 37,5% en poids dans l'eau préparée en utilisant de l'alcool polyvinylique en tant que tensioactif.
(3) Mélange de 15% d'eau et de 85% d'alcool isotridécylique éthoxylé par 8 à 9 moles d'oxyde d'éthylène par mole d'alcool isotridécylique.
(4) Solution aqueuse contenant 23% en poids de silane.

La composition lubrifiante du tableau 1 a été préparée en deux étapes.

Etape 1

Un mélange composé du polydiméthylsiloxane non réactif de faible viscosité, de la résine MDT-OH, du méthyltriéthoxysilane, du tensioactif et d'une partie d'eau distillée (selon un rapport eau/tensioactif de 1,2) est homogénéisé au préalable sous agitation modérée pendant 15 minutes à température ambiante.
Le mélange ainsi obtenu est traité par broyage jusqu'à inversion de phase, à l'aide d'un broyeur Moritz®, pour passer d'une phase fluide eau/huile à une phase épaisse huile/eau.
La dilution de la phase épaisse obtenue est réalisée sous agitation moyenne en 40 minutes, à l'aide d'une quantité d'eau distillée déterminée pour obtenir une émulsion dont la matière sèche est de 40%. L'agent bactéricide et l'agent antioxydant sont ajoutés pendant la dilution. Le silane (g) et le catalyseur sont ajoutés en fin de dilution, une homogénéisation sous agitation modérée est réalisée pendant 10 minutes, suivie d'une filtration.

Etape 2

La quantité d'eau restante est chargée dans un récipient séparé, on y ajoute le biocide, l'antimousse, l'agent mouillant et on agite le contenu de ce récipient pendant 10 minutes. La gomme xanthane et un autre agent mouillant sont chargés dans un autre récipient, mélangés pendant 10 minutes sous agitation vive, puis ajoutés au récipient contenant l'eau, le biocide et l'anti-mousse. Le mélange ainsi réalisé est ajouté à l'émulsion réalisée à l'étape 1. On agite encore, à vitesse modérée, pendant 30 minutes.

L'émulsion obtenue est caractérisée par une granulométrie moyenne de 0,388 µm et une proportion de matière sèche (60 min, 120° C) de 48,8% en poids.

## EXEMPLE 2

Cet exemple illustre une composition lubrifiante identique à celle de l'exemple 1 mais préparée à partir d'un constituant (a) plus visqueux, à savoir un polydiméthylsiloxane linéaire à terminaison $(CH_3)_3SiO_{1/2}$ de viscosité dynamique égale à 1 Pa.s à 25° C.
L'émulsion obtenue est caractérisée par une granulométrie moyenne de 0,402 µm et une proportion de matière sèche (60 min, 120° C) de 48,5% en poids.

## EXEMPLE 3

Cet exemple illustre une composition lubrifiante semblable à celle de l'exemple 1 mais comprenant en outre un polymère filmogène en dispersion aqueuse (latex styrène-acrylique).
La formulation de cette composition est donnée dans le tableau 2.

TABLEAU 2

| Nature du constituant | Identification | Pourcentage en poids dans l'émulsion |
|---|---|---|
| Polydiméthylsiloxane de l'exemple 1 | Constituant (a) | 36,57 |
| Résine MDT-OH de l'exemple 1 | Constituant (b) | 5,23 |
| Méthyltriéthoxysilane | Constituant (c) | 0,35 |
| Emulsion de dilaurate de dioctylétain de l'exemple 1 | Constituant (d) | 0,22 |
| Alcool isotridécylique polyéthoxylé de l'exemple 1 | Constituant (e) | 2,48 |
| $NH_2-(CH_2)_3-Si(OH)_3$ de l'exemple 1 | Constituant (g) | 2,22 |
| Latex de styrène-acrylique (1) | | 7,28 |
| Agent anti-mousse | | 0,19 |
| Agent anti-oxydant | | 0,05 |
| Bactéricide | | 0,02 |
| Epaississant (gomme xanthane) | | 0,10 |
| Agents mouillants (gomme xanthane) | | 0,28 |
| Eau distillée | | 45,01 |

(1) Dispersion aqueuse ; extrait sec = 50% ; pH = 8 ; viscosité Brookfield RVT à 50 tours/min = 800 mPa.s ; diamètre moyen des particules = 0,1 µm ; température minimale de formation de film = 0° C.

Cette composition est préparée comme à l'exemple 1, la dispersion aqueuse du polymère filmogène étant ajoutée à l'issue de la deuxième étape, à la suite de quoi l'émulsion est maintenue sous agitation pendant 30 minutes supplémentaires.
L'émulsion obtenue est caractérisée par une granulométrie moyenne de 0,385 µm et une proportion de matière sèche (60 min, 120° C) de 49,1% en poids.

## EXEMPLE 4

La composition de cet exemple est identique à celle de l'exemple 3, sinon que le latex styrène-acrylique est remplacé par une émulsion à 50 % en poids d'une huile réactive α,ω-dihydroxypolydiméthylsiloxane ayant une viscosité dynamique de 135 Pa.s à 25° C, ladite émulsion étant préparée à partir d'un tensioactif non ionique qui est l'alcool isotridécylique polyéthoxylé de l'exemple 1.
Le procédé de préparation de cette composition est le même qu'à l'exemple 3, le latex étant remplacé par l'huile réactive.

L'émulsion obtenue est caractérisée par une granulométrie moyenne de 0,400 µm et une proportion de matière sèche (60 min, 120° C) de 49,0% en poids.

Les propriétés des compositions des exemples 1 à 4 ont été mesurées par évaluation des coefficients de friction et de la durabilité.

Un coefficient de friction faible reflète de bonnes propriétés de glissement.

Les tests de mesure des coefficients de friction et de la durabilité ont été adaptés à l'application de la composition lubrifiante sur vessie dilatable en caoutchouc.

Test de glissement

L'objectif de ce test est d'apprécier le pouvoir glissant d'une composition lubrifiante placée à l'interface entre la vessie gonflable et la surface interne de l'enveloppe d'un pneumatique.

Ce test est réalisé en faisant glisser sur une surface de caoutchouc, dont la composition est celle de la vessie gonflable, un patin métallique de poids déterminé, sous lequel est fixé un film d'enveloppe de pneumatique (50 x 75 mm).

La surface de la vessie gonflable est préalablement traitée par la composition lubrifiante selon une procédure proche de celle utilisée en production.

Le coefficient de friction est mesuré à l'aide d'un tensiomètre (à la vitesse de 50 mm/min.). Cinq passages successifs sont réalisés sur le même échantillon de vessie gonflable en changeant à chaque fois l'échantillon d'enveloppe de pneumatique.

Plus les valeurs du coefficient de friction sont faibles et meilleures seront les propriétés de glissement de la composition lubrifiante.

Les cinq passages donnent des informations sur l'épuisement de la composition lubrifiante au cours de moulées successives.

Ce test de glissement est parfaitement représentatif des performances à atteindre sur l'outil industriel, c'est un premier critère de sélection.

Test de durabilité

La durabilité d'une composition lubrifiante correspond au nombre de pneumatiques réalisés sans dégradation de la surface de la vessie gonflable. Un film de vessie gonflable, préalablement traité par la composition lubrifiante à évaluer, est pressé au contact d'un film d'enveloppe de pneumatique, non vulcanisé, selon une série de cycles de pressions et de températures simulant les étapes de fabrication d'un pneumatique sur l'outil industriel.

Le film d'enveloppe de pneumatique est remplacé à chaque moulée. Le test est terminé lorsque les deux surfaces en contact restent collées. La composition lubrifiante à la surface du film de la vessie gonflable est épuisé et ne joue plus le rôle d'interface lubrifiante.

Le tableau 4 suivant rapporte les coefficients de friction obtenus à chaque passage pour chacune des compositions des exemples 1 à 4. A titre de comparaison, on a également évalué les performances de la composition de l'exemple décrit dans FR 2 494 294 dont la composition est indiquée au tableau 3.

TABLEAU 3

(exemple comparatif)

| Composition de FR 2 494 294 | Parties en poids |
|---|---|
| Polydiméthylsiloxane à groupes terminaux hydroxyles | 40,4 |
| Méthylhydrogénosiloxane (à 30%) | 175,0 |
| Acétate/stéarate de zinc (à 20 %) | 43,7 |
| Agent anti-mousse | 1,3 |
| Eau | 610,8 |

TABLEAU 4

| | | Ex. 1 | Ex. 2 | Ex. 3 | Ex. 4 | Ex. comp. |
|---|---|---|---|---|---|---|
| coefficient de friction | 1er passage | 0,0752 | 0,0765 | 0,0810 | 0,0895 | 0,0933 |
| | 2ème passage | 0,1138 | 0,0862 | 0,1100 | 0,1194 | 0,1400 |
| | 3ème passage | 0,1312 | 0,0936 | 0,1550 | 0,1648 | 0,1800 |
| | 4ème passage | 0,1571 | 0,1419 | 0,2100 | 0,2200 | 0,2316 |
| | 5ème passage | 0,1710 | 0,2494 | 0,2820 | 0,2900 | 0,3400 |

Il résulte clairement du tableau 4, que les coefficients de friction mesurés dans le cas de l'exemple comparatif sont supérieurs à ceux mesurés dans le cas de chacune des compositions de l'invention.

Le tableau 5 rapporte la durabilité des compositions des exemples 1 à 4 de l'invention ainsi que celle de l'exemple comparatif.

TABLEAU 5

| Exemple | Durabilité |
|---|---|
| Exemple 1 | 10 |
| Exemple 2 | 12 |
| Exemple 3 | 9 |
| Exemple 4 | 9 |
| Exemple comparatif | 8 |

**EXEMPLE 5**

Cet exemple illustre une composition selon l'invention ne comprenant ni huile réactive (h) ni réticulant hydrosoluble (g). La formulation de la composition lubrifiante est rapportée dans le tableau 6.

TABLEAU 6

| Nature du constituant | Indentification | Pourcentage en poids dans l'émulsion |
|---|---|---|
| Polydiméthylsiloxane de l'exemple 2 | Constituant (a) | 41,167 |
| Résine MDT-OH de l'exemple 1 | Constituant (b) | 5,885 |
| Méthyl triéthoxysilane | Constituant (c) | 0,389 |
| Emulsion de dilaurate de dioctylétain de l'exemple 1 | Constituant (d) | 0,25 |
| Alcool isotridécylique polyéthoxylé de l'ex. 1 | Constituant (e) | 2,793 |
| Bactéricide | | 0,0199 |
| Agent anti-oxydant | | 0,0498 |
| Eau distillée | | 49,446 |

Cette émulsion est préparée par mise en oeuvre du procédé de l'exemple 1, sinon que, en fin de dilution, à l'étape 1, seule l'émulsion de sel d'étain est ajoutée.
Les quantités d'eau distillée ajoutées successivement à la première étape (avant inversion, puis pour la dilution) sont respectivement de 2,424 et de 47,02 % en poids.
L'émulsion obtenue est caractérisée par :

- une granulométrie moyenne de 0,405 µm ;
- une proportion de matière sèche (60 min, 120° C) de 48,5% en poids ;
- un coefficient de friction 0,1849 ;
- une durabilité de 4.

**EXEMPLE 6**

Cet exemple illustre une composition identique à celle de l'exemple 5 sinon qu'elle comprend un réticulant hydrosoluble (g).
La formulation de la composition lubrifiante est la suivante :

TABLEAU 7

| Nature du constituant | Identification | Pourcentage en poids dans l'émulsion |
|---|---|---|
| Polydiméthylsiloxane de l'exemple 2 | Constituant (a) | 40,135 |
| Résine MDT-OH de l'exemple 1 | Constituant (b) | 5,737 |
| Méthyltriéthoxysilane | Constituant (c) | 0,379 |
| Emulsion de dilaurate de dioctylétain de l'exemple 1 | Constituant (d) | 0,25 |
| Alcool isotridécylique polyéthoxylé de l'ex. 1 | Constituant (e) | 2,723 |
| $NH_2$-$(CH_2)_3$-$Si(OH)_3$ de l'ex. 1 | Constituant (g) | 2,5 |
| Bactéricide | | 0,0194 |
| Agent anti-oxydant | | 0,0486 |
| Eau distillée | | 48,207 |

Cette composition est préparée par mise en oeuvre d'un procédé semblable à celui de l'exemple 1. Les quantités d'eau ajoutées respectivement à l'étape 1 (avant inversion, puis pour la dilution) sont respectivement de 2,37 % en poids et de 45,84 % en poids, les pourcentages étant calculés par rapport au poids total des ingrédients.
Les caractéristiques de la composition lubrifiante sont :

- une granulométrie moyenne de 0,405 µm ;
- une proportion de matière sèche (60 min, 120° C) de 48,6 % ;
- un coefficient de friction de 0,1808 ;
- une durabilité 8.

On constate, par comparaison des coefficients de friction et de la durabilité des compositions des exemples 5 et 6, que la présence d'un agent réticulant hydrosoluble améliore les propriétés de glissement et, dans une moindre mesure, de durabilité.

**Revendications**

1. Composition lubrifiante, sous forme d'émulsion huile dans eau, à base de siloxane et ne dégageant pas d'hydrogène comprenant :

    (a) une huile polydiorganosiloxane non réactive aux propriétés lubrifiantes présentant une viscosité dynamique de l'ordre de $5.10^{-2}$ à $30.10^{2}$ Pa.s à 25°C ;
    (b) une résine polyorganosiloxane porteuse, avant émulsification, de substituants hydroxyles condensables et comportant avant émulsification au moins deux motifs siloxyles différents choisis parmi ceux de formule

$(R_0)_3SiO_{1/2}$(M) ; $(R_0)_2SiO_{2/2}$(D) ; $R_0SiO_{3/2}$(T) et $SiO_{4/2}$ (Q), l'un au moins de ces motifs étant un motif T ou Q, formules dans lesquelles $R_0$ représente un substituant organique monovalent, le nombre moyen par molécule de radicaux organiques $R_0$ pour un atome de silicium étant compris entre 1 et 2 ; et ladite résine présentant une teneur pondérale en substituants hydroxyles comprise entre 0,1 et 10% en poids, et, de préférence entre 0,2 et 5% en poids ;
(c) un réticulant soluble dans la phase silicone comprenant au moins deux fonctions capables de réagir avec la résine polyorganosiloxane (b) ;
(d) un catalyseur de condensation capable de catalyser la réaction du constituant (b) avec le constituant (c) ;
(e) un tensioactif ; et
(f) de l'eau,

ladite composition comprenant

- de 5 à 95 parties en poids du constituant (a) ;
- de 0,5 à 50 parties en poids du constituant (b) ;
- de 0,1 à 20 parties en poids du constituant (c) ;
- de 0,05 à 10 parties en poids du constituant (d) ;

pour 100 parties en poids de la somme des constituants (a) + (b) + (c) + (d) ;
les quantités de tensioactifs et d'eau étant suffisantes pour l'obtention d'une émulsion huile-dans-eau.

2. Composition selon la revendication 1, **caractérisée en ce que** le catalyseur (d) est un catalyseur à l'étain, par exemple le sel d'étain d'un acide organique.

3. Composition selon la revendication 2, **caractérisée en ce que** le catalyseur (d) est un dicarboxylate de dialkylétain.

4. Composition selon l'une quelconque des revendications précédentes, **caractérisée en ce que** le constituant (c) est choisi parmi les organotrialcoxysilanes, les organotriacyloxysilanes, les organotrioximosilanes et les tétraalkylsilicates.

5. Composition selon la revendication 4, **caractérisée en ce que** le constituant (c) est un alkyltrialcoxysilane de formule $YSiZ_3$ dans laquelle Y est alkyle, et Z est alcoxy.

6. Composition selon l'une quelconque des revendications précédentes, **caractérisée en ce que** le constituant (a) est un polydiorganosiloxane linéaire à motifs récurrents de formule $(R)_2SiO_{2/2}$, terminé à ses extrémités de chaîne par des motifs $(R)_3SiO_{1/2}$, dans lequel R est un groupe organique monovalent choisi parmi alkyle, alcényle, aryle, cycloalkyle, cycloalcényle, aralkyle ou alkaryle.

7. Composition selon la revendication 6, **caractérisée en ce que** le constituant (a) est un polydiméthylsiloxane.

8. Composition selon l'une quelconque des revendications précédentes, **caractérisée en ce que** la résine (b) est une résine DT ou MDT hydroxylée comprenant au moins 20% en poids de motifs T et ayant une teneur pondérale en groupements hydroxyle allant de 0,1 à 10%, de préférence de 0,2 à 5%.

9. Composition selon l'une quelconque des revendications précédentes, **caractérisée en ce que** la résine (b) présente une viscosité dynamique à 25° C comprise entre 0,2 et 200 Pa.s.

10. Composition selon l'une quelconque des revendications précédentes, **caractérisée en ce qu'**elle comprend en outre (g) de 0,5 à 15 parties en poids, pour cent parties en poids de la somme des constituants (a) + (b) + (c) + (d) + (g), d'un réticulant hydrosoluble choisi parmi les silanes et/ou les polydiorganosiloxanes (POS) hydroxylés, ledit reticulant étant porteur d'au moins un groupement organique à fonction $F_r$, $F_r$ étant choisi parmi les fonctions amino éventuellement substituées, époxy, acroyl ($CH_2$=CH-CO) éventuellement substituées, méthacroyl ($CH_2$=C($CH_3$)-CO-) éventuellement substituées, uréido ($NH_2$-CO-NH-) éventuellement substituées, thiol éventuellement substituées et halogène.

11. Composition selon la revendication 10, **caractérisée en ce que** le constituant (g) a pour formule $R_2R_1N$-$R_a$-Si(OH)$_3$ dans laquelle $R_a$ représente alkylène et $R_1$ et $R_2$ représentent un atome d'hydrogène ou un groupe alkyle.

**12.** Composition selon l'une quelconque des revendications précédentes, **caractérisée en ce qu'**elle comprend en outre au moins (h) une huile polydiorganosiloxane linéaire réactive présentant par molécule au moins deux groupements OH, ledit polydiorganosiloxane présentant une viscosité dynamique à 25°C comprise entre $5.10^{-2}$ et $30.10^{2}$ Pa.s.

**13.** Composition selon la revendication 12, **caractérisée en ce que** ledit constituant (h) a pour formule :

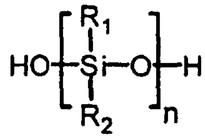

dans laquelle n est un entier supérieur ou égal à 10, $R_1$ et $R_2$ identiques ou différents représentent -OH, alkyle, cycloalkyle, alcényle, cycloalcényle ou amino.

**14.** Composition selon l'une quelconque des revendications précédentes, **caractérisée en ce qu'**elle comprend en outre un polymère filmogène et par exemple un copolymère styrène-acrylique.

**15.** Composition selon l'une quelconque des revendications précédentes, **caractérisée en ce qu'**elle comprend de 40 à 95% en poids d'eau.

**16.** Composition selon l'une quelconque des revendications précédentes, **caractérisée en ce qu'**elle comprend de 0,5 à 10% en poids de tensioactif.

**17.** Procédé de préparation d'une composition lubrifiante selon l'une quelconque des revendications 1 à 16, comprenant les étapes consistant à :

α - mettre en émulsion dans l'eau (f), un mélange de l'huile polydiorganosiloxane non réactive (a), de la résine polyorganosiloxane (b), et du réticulant soluble dans la phase silicone (c), en présence du tensioactif (e), de façon à préparer une émulsion de type huile dans eau ;
β - ajouter à l'émulsion précédente, une émulsion du catalyseur (d) dans l'eau.

**18.** Procédé selon la revendication 17, **caractérisé en ce qu'**il comprend en outre, après mise en oeuvre de l'étape β, l'addition, à l'émulsion résultante, d'une émulsion aqueuse d'une huile polydiorganosiloxane linéaire réactive (h).

**19.** Procédé selon l'une quelconque des revendications 17 et 18, **caractérisé en ce qu'**il comprend en outre, après mise en oeuvre de l'étape α, l'addition d'une solution aqueuse d'un réticulant hydrosoluble.

**20.** Article revêtu d'une composition selon l'une quelconque des revendications 1 à 16.

**21.** Article pouvant être obtenu par chauffage d'un article selon la revendication 20.

**22.** Vessie dilatable en caoutchouc revêtue sur sa surface externe d'une composition selon l'une quelconque des revendications 1 à 16, pour le façonnage et la vulcanisation de bandages pneumatiques ou semi-pneumatiques.

**23.** Vessie dilatable en caoutchouc pouvant être obtenue par chauffage d'une vessie selon la revendication 22 à une température de 80 à 150° C.

**24.** Bandage pneumatique ou semi-pneumatique cru comportant des éléments qui constitueront sa bande de roulement externe destinée à venir au contact du sol, revêtu sur sa surface interne d'une composition selon l'une quelconque des revendications 1 à 16.

**25.** Utilisation d'une composition lubrifiante selon l'une quelconque des revendications 1 à 16 pour la lubrification d'un article.

**26.** Utilisation d'une composition lubrifiante selon l'une quelconque des revendications 1 à 16 lors du façonnage et de

la vulcanisation de bandages pneumatiques ou semi-pneumatiques, pour la lubrification de la vessie de vulcanisation dilatable en caoutchouc.

## Claims

**1.** Lubricating composition, in the form of an oil-in-water emulsion, based on siloxane and not emitting hydrogen, comprising:

(a) a polydiorganosiloxane oil which is nonreactive to the lubricating properties, having a dynamic viscosity of the order of $5 \times 10^{-2}$ to $30 \times 10^{2}$ Pa.s at 25°C;
(b) a polyorganosiloxane resin carrying, before emulsification, condensable hydroxyl substituents and containing, before emulsification, at least two different siloxyl units chosen from those of formula $(R_o)_3SiO_{1/2}$(M); $(R_o)_2SiO_{2/2}$(D); $R_oSiO_{3/2}$(T) and $SiO_{4/2}$(Q), at least one of these units being a T or Q unit, in which formulae $R_o$ represents a monovalent organic substituent, the average number per molecule of organic radicals $R_o$ for a silicon atom being between 1 and 2; and the the said resin having a weight content of hydroxyl substituents of between 0.1 and 10% by weight, and, preferably between 0.2 and 5% by weight;
(c) a crosslinking agent which is soluble in the silicone phase, comprising at least two functional groups capable of reacting with the polyorganosiloxane resin (b);
(d) a condensation catalyst capable of catalyzing the reaction of constituent (b) with constituent (c);
(e) a surfactant; and
(f) water,

the the said composition comprising

- from 5 to 95 parts by weight of constituent (a);
- from 0.5 to 50 parts by weight of constituent (b);
- from 0.1 to 20 parts by weight of constituent (c);
- from 0.05 to 10 parts by weight of constituent (d);

per 100 parts by weight of the sum of constituents (a) + (b) + (c) + (d);
the quantities of surfactants and water being sufficient to obtain an oil-in-water emulsion.

**2.** Composition according to Claim 1, **characterized in that** the catalyst (d) is a tin-based catalyst, for example the tin salt of an organic acid.

**3.** Composition according to Claim 2, **characterized in that** the catalyst (d) is a dialkyltin dicarboxylate.

**4.** Composition according to any one of the preceding claims, **characterized in that** the constituent (c) is chosen from organotrialkoxysilanes, organotriacyloxysilanes, organotrioximosilanes and tetraalkyl silicates.

**5.** Composition according to Claim 4, **characterized in that** the constituent (c) is an alkyltrialkoxysilane of formula $YSiZ_3$ in which Y is alkyl, and Z is alkoxy.

**6.** Composition according to any one of the preceding claims, **characterized in that** the constituent (a) is a linear polydiorganosiloxane containing recurring units of formula $(R)_2SiO_{2/2}$, terminated at its chain ends by $(R)_3SiO_{1/2}$ units, in which R is a monovalent organic group chosen from alkyl, alkenyl, aryl, cycloalkyl, cycloalkenyl, aralkyl or alkaryl.

**7.** Composition according to Claim 6, **characterized in that** the constituent (a) is a polydimethylsiloxane.

**8.** Composition according to any one of the preceding claims, **characterized in that** the resin (b) is a hydroxylated resin DT or MDT comprising at least 20% by weight of T units and having a weight content of hydroxyl groups ranging from 0.1 to 10%, preferably from 0.2 to 5%.

**9.** Composition according to any one of the preceding claims, **characterized in that** the resin (b) has a dynamic viscosity at 25°C of between 0.2 and 200 Pa.s.

**10.** Composition according to any one of the preceding according to, **characterized in that** it comprises in addition (g) from 0.5 to 15 parts by weight per hundred parts by weight of the sum of the constituents (a) + (b) + (c) + (d) + (g), of a water-soluble crosslinking agent chosen from hydroxylated silanes and/or polydiorganosiloxanes (POSs), the said crosslinking agent carrying at least one organic group with an $F_r$ functional group, $F_r$ being chosen from optionally substituted amino functional groups, epoxy, optionally substituted acroyl ($CH_2$=CH-CO), optionally substituted methacroyl ($CH_2$=C($CH_3$)-CO-), optionally substituted ureido ($NH_2$-CO-NH-), optionally substituted thiol or halogen functional group.

**11.** Composition according to Claim 10, **characterized in that** the constituent (g) has the formula $R_2R_1N-R_a-Si(OH)_3$ in which $R_a$ represents alkylene and $R_1$ and $R_2$ represent a hydrogen atom or an alkyl group.

**12.** Composition according to any one of the preceding according to, **characterized in that** it comprises in addition at least (h) a reactive linear polydiorganosiloxane oil having per molecule at least two OH groups, the said polydiorganosiloxane having a dynamic viscosity at 25°C of between $5 \times 10^{-2}$ and $3.0 \times 10^{2}$ Pa.s.

**13.** Composition according to Claim 12, **characterized in that** the said constituent (h) has the formula:

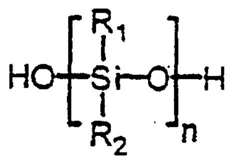

in which n is an integer greater than or equal to 10, $R_1$ and $R_2$, which are identical or different, represent -OH, alkyl, cycloalkyl, alkenyl, cycloalkenyl or amino.

**14.** Composition according to any one of the preceding claims, **characterized in that** it comprises, in addition, a film-forming polymer and, for example, a styrene-acrylic copolymer.

**15.** Composition according to any one of the preceding claims, **characterized in that** it comprises from 40 to 95% by weight of water.

**16.** Composition according to any one of the preceding claims, **characterized in that** it comprises from 0.5 to 10% by weight of surfactant.

**17.** Method for preparing a lubricating composition according to any one of Claims 1 to 16, comprising the steps consisting in:

α - emulsifying in water (f), a mixture of nonreactive polydiorganosiloxane oil (a), polyorganosiloxane resin (b), and crosslinking agent which is soluble in the silicone phase (c), in the presence of the surfactant (e) so as to prepare an oil-in-water type emulsion;
β - adding to the preceding emulsion, an emulsion of the catalyst (d) in water.

**18.** Method according to Claim 17, **characterized in that** it comprises, in addition, after carrying out step β, the addition, to the resulting emulsion, of an aqueous emulsion of a reactive linear polydiorganosiloxane oil (h).

**19.** Method according to either of Claims 17 and 18, **characterized in that** it comprises, in addition, after carrying out step α, the addition of an aqueous solution of a water-soluble crosslinking agent.

**20.** Article coated with a composition according to any one of Claims 1 to 16.

**21.** Article which can be obtained by heating an article according to Claim 20.

**22.** Expandable rubber bladder coated on its outer surface with a composition according to any one of Claims 1 to 16, for shaping and curing pneumatic and semipneumatic tyres.

**23.** Expandable rubber bladder which can be obtained by heating a bladder according to Claim 22 to a temperature

of 80 to 150°C.

**24.** Raw pneumatic or semipneumatic tyre comprising elements which will constitute its outer tyre tread intended to come into contact with the ground, coated on its inner surface with a composition according to any one of Claims 1 to 16.

**25.** Use of a lubricating composition according to any one of Claims 1 to 16 for the lubrication of an article.

**26.** Use of a lubricating composition according to any one of Claims 1 to 16 during the shaping and curing of pneumatic or semipneumatic tyres, for the lubrication of the expandable curing rubber bladder.

**Patentansprüche**

**1.** Schmierzusammensetzung in Form einer Öl-in-Wasser-Emulsion auf der Basis von Siloxan und wasserstoffemissionsfrei, umfassend:

(a) ein nicht reaktives Polydiorganosiloxanöl mit den Schmiereigenschaften, das eine dynamische Viskosität in der Größenordnung von $5 \cdot 10^{-2}$ bis $30 \cdot 10^{2}$ Pa.s bei 25 °C aufweist;
(b) ein Polyorganosiloxanharz, das vor dem Emulgieren kondensierbare Hydroxylsubstituenten trägt und vor dem Emulgieren wenigstens zwei verschiedene Siloxyleinheiten umfasst, die ausgewählt sind unter denjenigen der Formel $(R_0)_3SiO_{1/2}$ (M), $(R_0)_2SiO_{2/2}$ (D), $R_0SiO_{3/2}$ (T) und $SiO_{4/2}$ (Q), wobei wenigstens eine dieser Einheiten eine Einheit T oder Q ist, Formeln, in denen $R_0$ einen einwertigen organischen Substituenten darstellt, wobei die mittlere Anzahl pro Molekül. an organischen Resten $R_0$ auf ein Siliciumatom zwischen 1 und 2 liegt; und wobei besagtes Harz einen Gewichtsgehalt an Hydroxylsubstituenten zwischen 0,1 und 10 Gew.-% und vorzugsweise zwischen 0,2 und 5 Gew.-% aufweist;
(c) ein in der Siliconphase lösliches Vernetzungsmittel, das wenigstens zwei Funktionen umfasst, die mit dem Polyorganosiloxanharz (b) reagieren können;
(d) einen Kondensationskatalysator, der die Reaktion des Bestandteils (b) mit dem Bestandteil (c) katalysieren kann;
(e) ein Tensid und
(f) Wasser,

wobei besagte Zusammensetzung umfasst

- 5 bis 95 Gewichtsteile des Bestandteils (a);
- 0,5 bis 50 Gewichtsteile des Bestandteils (b);
- 0,1 bis 20 Gewichtsteile des Bestandteils (c);
- 0,05 bis 10 Gewichtsteile des Bestandteils (d);

auf 100 Gewichtsteile der Summe der Bestandteile (a) + (b) + (c) + (d); wobei die Mengen an Tensiden und Wasser ausreichend sind, um eine Öl-in-Wasser-Emulsion zu erhalten.

**2.** Zusammensetzung gemäß Anspruch 1, **dadurch gekennzeichnet, dass** der Katalysator (d) ein Zinnkatalysator ist, beispielsweise das Zinnsalz einer organischen Säure.

**3.** Zusammensetzung gemäß Anspruch 2, **dadurch gekennzeichnet, dass** der Katalysator (d) ein Dialkylzinndicarboxylat ist.

**4.** Zusammensetzung gemäß einem der vorhergehenden Ansprüche, **dadurch gekennzeichnet, dass** der Bestandteil (c) ausgewählt ist unter den Organotrialkoxysilanen, den Organotriacyloxysilanen, den Organotrioximosilanen und den Tetraalkylsilikaten.

**5.** Zusammensetzung gemäß Anspruch 4, **dadurch gekennzeichnet, dass** der Bestandteil (c) ein Alkyltrialkoxysilan der Formel $YSiZ_3$ ist, worin Y Alkyl ist und Z Alkoxy ist.

**6.** Zusammensetzung gemäß einem der vorhergehenden Ansprüche, **dadurch gekennzeichnet, dass** der Bestandteil (a) ein lineares Polydiorganosiloxan mit sich wiederholenden Einheiten der Formel $(R)_2SiO_{2/2}$ ist, das an seinen

Kettenenden mit Einheiten $(R)_3SiO_{1/2}$ endet, worin R eine einwertige organische Gruppe ist, die ausgewählt ist unter Alkyl, Alkenyl, Aryl, Cycloalkyl, Cycloalkenyl, Aralkyl oder Alkaryl.

**7.** Zusammensetzung gemäß Anspruch 6, **dadurch gekennzeichnet, dass** der Bestandteil (a) ein Polydimethylsiloxan ist.

**8.** Zusammensetzung gemäß einem der vorhergehenden Ansprüche, **dadurch gekennzeichnet, dass** das Harz (b) ein hydroxyliertes DT- oder MDT-Harz ist, das wenigstens 20 Gew.-% Einheiten T umfasst und einen Gewichtsgehalt an Hydroxylgruppen von 0,1 bis 10 %, vorzugsweise von 0,2 bis 5 % hat.

**9.** Zusammensetzung gemäß einem der vorhergehenden Ansprüche, **dadurch gekennzeichnet, dass** das Harz (b) eine dynamische Viskosität bei 25 °C zwischen 0,2 und 200 Pa·s aufweist.

**10.** Zusammensetzung gemäß einem der vorhergehenden Ansprüche, **dadurch gekennzeichnet, dass** sie außerdem (g) 0,5 bis 15 Gewichtsteile auf einhundert Gewichtsteile der Summe der Bestandteile (a) + (b) + (c) + (d) + (g) eines wasserlöslichen Vernetzungsmittels umfasst, das ausgewählt ist unter den Silanen und/oder den hydroxylierten Polydiorganosiloxanen (POS), wobei besagtes Vernetzungsmittel wenigstens eine organische Gruppe mit einer Funktion $F_r$ trägt, wobei $F_r$ ausgewählt ist unter den Funktionen Amino, gegebenenfalls substituiert, Epoxy, Acryloyl ($CH_2$=CH-CO), gegebenenfalls substituiert, Methacryloyl ($CH_2$=C($CH_3$)-CO-), gegebenenfalls substituiert, Ureido ($NH_2$-CO-NH-), gegebenenfalls substituiert, Thiol, gegebenenfalls substituiert, und Halogen.

**11.** Zusammensetzung gemäß Anspruch 10, **dadurch gekennzeichnet, dass** der Bestandteil (g) die Formel $R_2R_1N\text{-}R_a\text{-}Si(OH)_3$ hat, worin $R_a$ Alkylen darstellt und $R_1$ und $R_2$ ein Wasserstoffatom oder eine Alkylgruppe darstellen.

**12.** Zusammensetzung gemäß einem der vorhergehenden Ansprüche, **dadurch gekennzeichnet, dass** sie außerdem wenigstens (h) ein reaktives lineares Polydiorganosiloxanöl umfasst, das pro Molekül wenigstens zwei OH-Gruppen aufweist, wobei besagtes Polydiorganosiloxan eine dynamische Viskosität bei 25 °C zwischen $5 \cdot 10^{-2}$ und $30 \cdot 10^{2}$ Pa·s aufweist.

**13.** Zusammensetzung gemäß Anspruch 12, **dadurch gekennzeichnet, dass** besagter Bestandteil (h) die Formel:

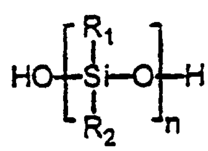

hat, worin n eine ganze Zahl größer oder gleich 10 ist, $R_1$ und $R_2$, die gleich oder verschieden sind, -OH, Alkyl, Cycloalkyl, Alkenyl, Cycloalkenyl oder Amino darstellen.

**14.** Zusammensetzung gemäß einem der vorhergehenden Ansprüche, **dadurch gekennzeichnet, dass** sie außerdem ein filmbildendes Polymer und beispielsweise ein Styren-Acryl-Copolymer umfasst.

**15.** Zusammensetzung gemäß einem der vorhergehenden Ansprüche, **dadurch gekennzeichnet, dass** sie 40 bis 95 Gew.-% Wasser umfasst.

**16.** Zusammensetzung gemäß einem der vorhergehenden Ansprüche, **dadurch gekennzeichnet, dass** sie 0,5 bis 10 Gew.-% Tensid umfasst.

**17.** Verfahren zur Herstellung einer Schmierzusammensetzung gemäß einem der Ansprüche 1 bis 16, das die Schritte umfasst, die darin bestehen:

α - ein Gemisch des nicht reaktiven Polydiorganosiloxanöls (a), des Polyorganosiloxanharzes (b) und des in der Siliconphase löslichen Vernetzungsmittels (c) in Gegenwart des Tensids (e) in Wasser (f) zu emulgieren, um eine Emulsion vom Öl-in-Wasser-Typ herzustellen;
β - eine Emulsion des Katalysators (d) in Wasser zu der vorherigen Emulsion hinzuzufügen.

**18.** Verfahren gemäß Anspruch 17, **dadurch gekennzeichnet, dass** es außerdem nach der Durchführung des Schritts β die Zugabe einer wässrigen Emulsion eines reaktiven linearen Polydiorganosiloxanöls (h) zu der sich ergebenden Emulsion umfasst.

**19.** Verfahren gemäß einem der Ansprüche 17 und 18, **dadurch gekennzeichnet, dass** es außerdem nach der Durchführung des Schritts α die Zugabe einer wässrigen Lösung eines wasserlöslichen Vernetzungsmittels umfasst.

**20.** Gegenstand, der mit einer Zusammensetzung gemäß einem der Ansprüche 1 bis 16 beschichtet ist.

**21.** Gegenstand, der durch Erhitzen eines Gegenstands gemäß Anspruch 20 erhalten werden kann.

**22.** Dehnbarer Heizbalg aus Kautschuk, der auf seiner äußeren Oberfläche mit einer Zusammensetzung gemäß einem der Ansprüche 1 bis 16 beschichtet ist, für das Formen und Vulkanisieren von Luft- oder Hohlkammerreifen.

**23.** Dehnbarer Heizbalg aus Kautschuk, der durch Erhitzen eines Heizbalgs gemäß Anspruch 22 auf eine Temperatur von 80 bis 150 °C erhalten werden kann.

**24.** Luft- oder Hohlkammerreifenrohling, der Elemente umfasst, die seine äußere Lauffläche, die dazu bestimmt ist, in Kontakt mit dem Boden zu kommen, bilden werden, auf seiner inneren Oberfläche beschichtet mit einer Zusammensetzung gemäß einem der Ansprüche 1 bis 16.

**25.** Verwendung einer Schmierzusammensetzung gemäß einem der Ansprüche 1 bis 16 für das Schmieren eines Gegenstands.

**26.** Verwendung einer Schmierzusammensetzung gemäß einem der Ansprüche 1 bis 16 beim Formen und Vulkanisieren von Luft- oder Hohlkammerreifen für das Schmieren des dehnbaren Vulkanisierheizbalgs aus Kautschuk.